# EUROPÄISCHE PATENTSCHRIFT

(11) **EP 1 997 753 B1**
(45) Veröffentlichungstag und Bekanntmachung des Hinweises auf die Patenterteilung: **13.01.2010**
(21) Anmeldenummer: 07010556.4
(22) Anmeldetag: 27.05.2007
(51) Int. Cl.: B65G 67/24, B65G 53/24

(54) **Verfahren und Anordnung zum Entladen von rieselfähigen Medien aus Tanklastzügen**
Method and assembly for unloading free-flowing mediums from road tankers
Procédé et agencement destiné à la décharge de matériaux pouvant couler des citernes

(43) Veröffentlichungstag der Anmeldung: 03.12.2008
(73) Patentinhaber: SETH GmbH, 9220 Bischofszell (CH)
(72) Erfinder: Apfelstädt, Sebastian, CH-9214 Kradolf (CH)
(74) Vertreter: Helge, Reiner

(56) Entgegenhaltungen:
- DE-A1- 2 512 057
- DE-B- 1 166 695

## Beschreibung

Die Erfindung betrifft ein Verfahren und eine Anordnung zum Entladen von rieselfähigen bzw. schüttfähigen Substanzen aus Tanklastzügen. Die riesel- bzw. schüttfähigen Substanzen können in Pulverform oder feinkörniger Konsistenz vorliegen.

Bisher erfolgt der Transport von Flüssigkeiten und Festgut mit verschiedenen Spezialbehältern. Für den Transport von Flüssigkeiten werden vorwiegend Tanklastzüge verwendet, wobei dieses unter dem Aspekt der Entladung problemlos ist. Liegende, überwiegend zylindrische Tanks, die auf ein entsprechendes Fahrgestell aufgelegt sind, werden durch Öffnungen auf der Oberseite des Tanks befüllt. Die Entleerung erfolgt durch Öffnungen an der Tankunterseite. Die Auslaßöffnungen müssen lediglich freigegeben werden, damit die Flüssigkeit allein durch die Wirkung der Schwerkraft aus dem Tank abfließen kann. Beachtet werden muß dabei lediglich, daß die Auslaßöffnungen am tiefsten Punkt des Tanks liegen. Besondere Hilfsmittel zum vollständigen Entleeren des Tanks sind nicht notwendig.

Zum Transport von Festgut, also pulverförmigen oder rieselfähigem Ladegut dienen meist aufrecht stehende zylindrische Bauformen, deren unteres Ende trichterförmig ausgebildet ist. Diese werden oft auch als Kessel bezeichnet.

Während das Entleeren eines zum Transport von Flüssigkeiten bestimmten Tanks im allgemeinen keine besonderen Probleme bereitet, ergeben sich solche Probleme beim Entleeren von Kesseln, die dem Transport von Festgut dienen. Dieses verdichtet sich während des Transportes, wodurch ein Nachrutschen des Transportgutes in die geöffneten Auslasse während des Entladevorgangs behindert bzw. sogar verhindert wird.

Dem wird dadurch Rechung getragen, daß die Neigungswinkel der Auslaßtrichter entsprechend ausgeführt sind und/oder die Ausbildung der Wände des Auslaßtrichters als Belüftungsfläche erfolgt. Dadurch wird das Transportgut im Trichterbereich fluidisiert, das heißt es entsteht ein Gemisch aus Luft und Transportgutpartikeln und der Austrag wird erleichtert.

Aus der DE 25 12 057 A1 ist eine Vorrichtung zum Entladen von zu einer Trübe aufschlämmbaren Materialien aus Tanks, insbesondere aus Transporttanks mit wenigstens einer Einlaß- und einer im Boden des Behälters angeordneten Auslaßöffnung bekannt, bei der durch eine innerhalb des Tanks angeordnete und von außen bewegliche Düse, und durch eine an der Entladestelle angeordnete Speiseeinrichtung, an die die Düse anschließbar ist.

Im weiteren werden für den Transport von Festgut so genannte Silofahrzeuge benutzt. Die Entleerung kann auf unterschiedliche Weise erfolgen.
Zum einen durch Aufrichten des Silobehälters, wobei der Endbereich, durch den das Transportgut ausgetragen wird, ebenfalls trichterförmig ausgebildet sein muß und zum anderen durch pneumatische Fördersysteme, bei denen ein Strömungsmedium - meist Luft - erzeugt wird und in den Silobehälter unter Druck eingeleitet wird.

Dieses wird als kontinuierliche Trägerströmung zum Transport des Festgutes verwendet. Dabei wird eine Mischung zwischen dem Trägermedium und dem Transportgut gebildet und über den Siloauslaß in Förderleitungen gedrückt, die mit einem Lagerbehälter verbunden sind.

Eine Vorrichtung zum Entladen und Fördern, gegebenenfalls auch Verladen oder Speichern, von stückigem Fördergut mit verhältnismäßig hohem Flüssigkeitsgehalt, wie Mostobst und Maische oder ähnlichem ' Gut, insbesondere Weintrauben ist aus der DE-AS 1166 695 bekannt, bei der mittels einer pneumatischen Anlage mit Saugförderung, bestehend aus einer Absaugleitung mit Saugrüssel, einem Zentrifugalabscheider mit Wasserabscheider und Austragschleuse sowie einem Gebläse mit Luftzuführ- und Luftabführleitung, wobei zwischen dem Saugrüssel und der Absaugleitung ein biegsames, zusammendrückbares und auseinanderziehbares Rohrstückangeordnet und der Mantel des Saugrüssels an seinem Ansaugende mit Lufteintrittsöffnungen versehen ist, wobei die Absaugleitung und/oder das an die Austragschleuse anschließende Ablaufrohr sowohl in der Horizontalen als auch in der Vertikalen schwenkbar sind.

Bekannt ist eine weitere Möglichkeit zum Transport von oben näher beschriebenem Festgut durch Fahrzeuge mit Kippaufsatz. Zum Transport von pulverförmigen oder sehr feinkörnigen Festgut werden die kastenförmigen kippbaren Aufsätze der Fahrzeuge oft durch Kunststoff-Folien ausgekleidet. Um ein Auswehen bzw. eine Staubentwicklung oder ein Naßwerden des Transportgutes zu verhindern, muß dieses abgedeckt werden. Das Entleeren erfolgt in einfacher Art und Weise durch Ankippen des kastenförmigen Aufsatzes unter Ausnutzung der Schwerkraft.

Die Nachteile der vorbekannten Einrichtung bestehen zum einen darin, daß die verwendeten pneumatischen Förderanlagen mit einem niedrigen Mischungsverhältnis zwischen Fördergut und Trägermedium arbeiten, das heißt im Verhältnis zur Menge des Fördergutes wird ein großes Gewicht an Trägermedium benötigt. Desweiteren unterliegen die Förderanlagen starken Begrenzungen hinsichtlich des Arbeitsdruckes. Ein weiterer Nachteil besteht darin, daß die Fahrzeuge mit diesen pneumatischen Fördereinrichtungen bzw. mit Pumpen zur Druckerzeugung ausgerüstet sein müssen.

Die unterschiedlichen Konstruktionsprinzipien von Flüssigkeitstank und Festgutkesseln bzw. Silos machen einen Transport unterschiedlichen Ladeguts mit ein und demselben Behältertyp unmöglich, weshalb sowohl für den Festguttransport als auch für den Flüssigkeitstransport eine entsprechende Anzahl von Silo- bzw. Kesselfahrzeugen und Tankwagen vorrätig gehalten werden müssen.

Grundsätzlich ist es zwar möglich, mit einem Tanklastzug pulverförmiges bzw. feinkörniges Ladegut zu transportieren. Die Entladung bzw. Entleerung des Tanks gestaltet sich aber äußerst schwierig, da diese Fahrzeuge nicht mit entsprechenden Einrichtungen zur Entleerung von Feststoffen ausgerüstet sind.

Hier setzt nun die Erfindung ein, indem ihr die Aufgabe zugrunde liegt, ein Verfahren und eine Anordnung zum Entladen von rieselfähigen Medien (Feststoffen) aus Tanklastzügen, die eigentlich zum Transport von flüssigen Medien ausgelegt sind, zu schaffen, ohne daß diese umgebaut bzw. konstruktive Änderungen an ihnen vorgenommen werden müssen.

Erfindungsgemäß wird diese Aufgabe durch ein Verfahren zum Entladen von riesel- bzw. schüttfähigen Medien aus Tanklastzügen, die üblicherweise nur für den Transport von Flüssigkeiten eingesetzt werden, gelöst, wobei folgende Verfahrensschritte
a) Positionierung des Tanklastzuges bzw. des Tankdomes unter der Saugdüse mittels Bodenmarkierungen und an der Saugdüse angebrachten Kamera,
b) Absenken des die Saugdüse tragenden Auslegers auf die Höhe des Tanklastzuges,
c) Absenken der Saugdüse bis auf die Füllhöhe und Öffnen der Entriegelung der Saugdüse,
d) Starten des Saugvorganges, wobei die Lage der Saugdüse ständig an die sich verändernde Füllhöhe angepaßt wird,
ablaufen.

Die Verfahrensschritte a) bis d) werden pro Kammer bzw. Dom wiederholt, wobei die Kammern bzw. die Dome jeweils unter der Saugdüse positioniert werden. Nach dem Erreichen des Tankbodens wird die Saugdüse aus ihrer senkrechten Lage jeweils nach links und/oder rechts bis zu einem vorbestimmten Anschlag ausgelenkt. Die Steuerung des Entladevorganges mittels der Komponenten der Entladestation erfolgt über eine elektronische Schalt- und Steuereinheit.

Somit ist es möglich, Tanklastzüge sowohl zum Transport von Flüssigkeiten als auch zum Transport von riesel- bzw. schüttfähigen Substanzen zu verwenden, ohne daß bauliche Veränderungen an den Tanklastzügen vorgenommen werden müssen.

Die zur Durchführung des Verfahrens benutzte Anordnung ist als Entladestation ausgebildet und besteht im wesentlichen aus einer Saugförderanlage mit nachgeschalteter Druckförderanlage und einem Abscheidebehälter als Zwischenspeicher. Die Saugförderanlage besteht aus einem Sauggebläse, einer Saugleitung und einer am Ausleger über einen Hubantrieb höhenverfahrbar angeordneten Saugdüse.

An der Saugdüse ist eine Kamera angeordnet, mit deren Hilfe die Positionierung des Tanklastzuges, dessen Kammern bzw. Dome in Bezug zur Saugdüse überwacht werden können. Die Saugdüse wird über den Hubantrieb auf die Füllhöhe im Tanklastzug eingestellt und während des Saugvorganges wird die Saugdüse der sich verändernden Füllhöhe angepaßt.

Die Druckförderanlage besteht aus einem Druckgebläse, einem Förderleitungssystem, welches mit dem trichterförmigen Auslaß des als Zwischenspeicher ausgebildeten Abscheidebehälters verbunden ist. Mit Hilfe der Druckförderanlage wird das über die Saugförderanlage in den Zwischenspeicher verbrachte Entladegut in den eigentlichen Lagerbehälter geleitet.

Die Entladestation kann sowohl als Stationäranlage als auch als mobile Anlage ausgeführt sein. Bei einer mobilen Anlage ist es auch möglich, diese in Bezug auf den Tanklastzug zu positionieren.

Weitere vorteilhafte Ausführungen der Erfindung ergeben sich aus dem nachfolgenden Ausführungsbeispiel.

Anhand eines Ausführungsbeispieles soll die Erfindung näher beschrieben werden. Es zeigen
Figur 1 - Entladestation mit positioniertem Tanklastzug
Figur 2 - Ansicht der Entladestation
Figur 3 - Seitenansicht der Entladestation
Figur 4 - Draufsicht der Entladestation

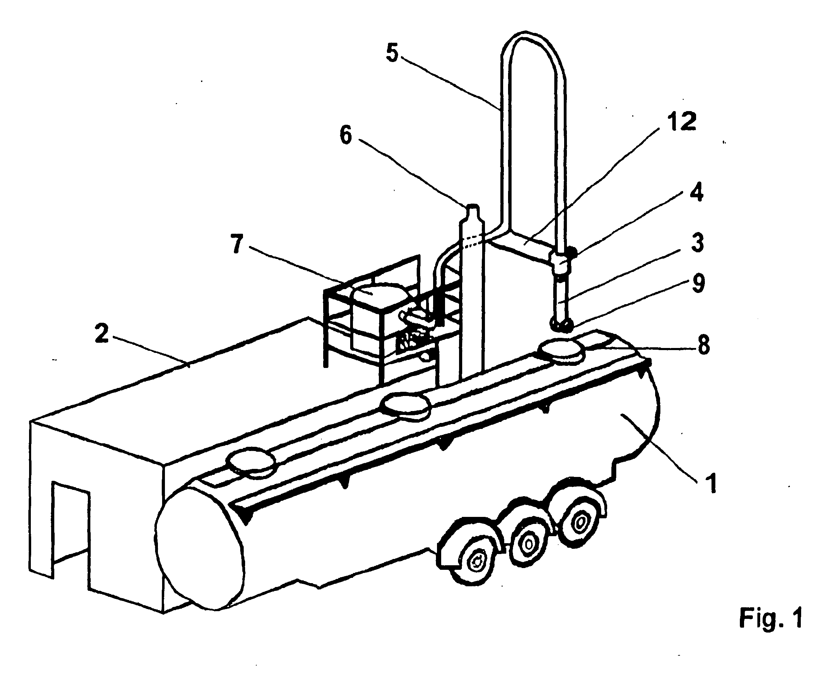

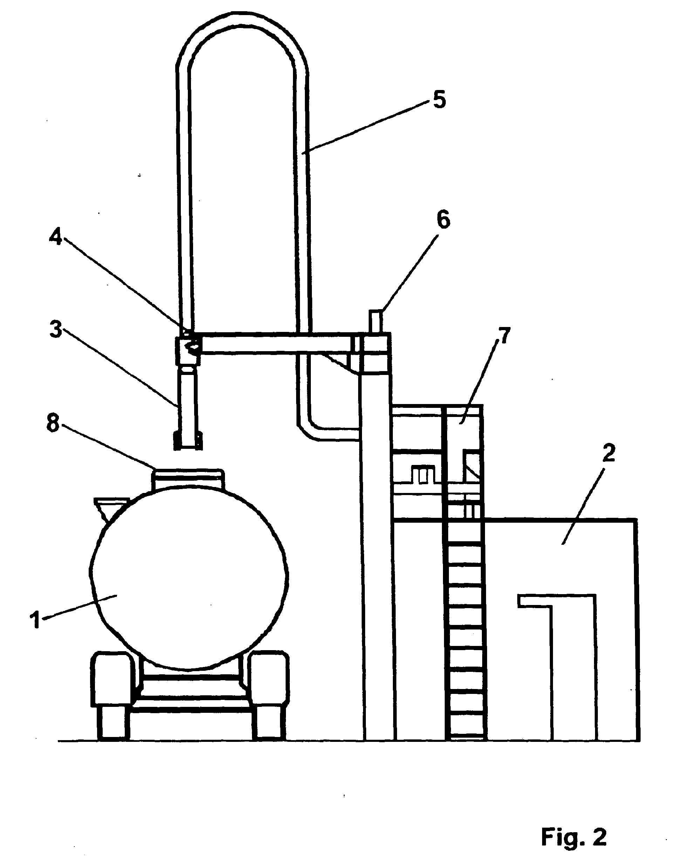

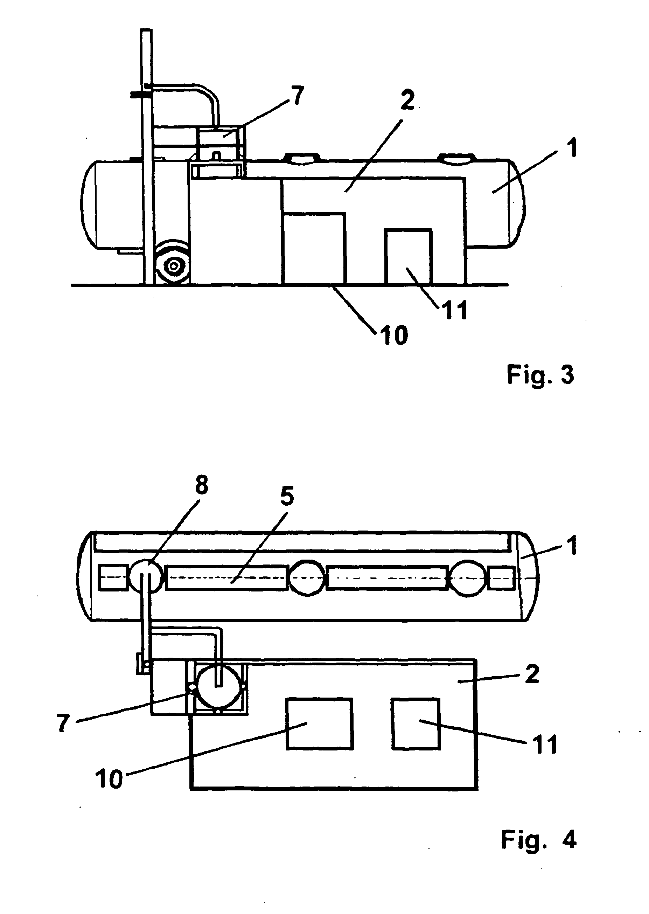

Die Figur 1 zeigt eine Gesamtansicht der Anordnung, die als Entladestation 2 ausgebildet ist, mit einem in Bezug zu dieser positioniertem Tanklastzug 1. Der Einfachheit halber ist der Tanklastzug 1 ohne Zugmaschine dargestellt. Weitere Ansichten sind in den Figuren 2 bis 4 dargestellt.

Beim Tanklastzug 1 handelt es sich um ein Fahrzeug, das zum Transport von flüssigen Lebensmitteln zugelassen ist. Der Tanklastzug 1 ist beispielsweise mit einem feinkörnigem, rieselfähigem Medium - hier Zucker - beladen. Die Positionierung des Tanklastzuges 1 zur Entladestation 2 erfolgt mit Hilfe von am Boden vorgesehenen Markierungen und einer an der Saugdüse 3 angebrachten Kamera 9, die dem Fahrer anzeigt, wann er mit seinem Tanklastzug 1 genau unter dem Dom 8 steht.

Nach dem Öffnen des Deckels des Domes 8 wird der Ausleger 12 mittels der Höhenverstellung 6 auf die Höhe des Tanklastzuges abgesenkt. Danach erfolgt das Absenken der Saugdüse 3 mittels eines Hubantriebes 4, bis diese entsprechend der Füllhöhe im Tank positioniert ist.

Die Saugdüse 3 ist über eine flexible Saugleitung 5 mit dem Abscheidebehälter 7 verbunden. Die Erzeugung eines Unterdrucks (Saugdruck) in der Saugleitung 5 bzw. in der Saugdüse 3 erfolgt über ein Sauggebläse 10, das im Inneren der Entladestation 2 angeordnet ist.

Nach dem Öffnen der Entriegelung der Saugdüse 3 startet der Entladevorgang. Die Saugdüse 3 wird entsprechend der verbleibenden Füllhöhe über den Hubantrieb 4 nachgeführt. Nachdem die Saugdüse 3 am Boden des Tanks 1 angekommen ist, wird diese nach rechts bzw. nach links bis zum Anschlag ausgelenkt, so daß der Tank 1 vollständig entleert werden kann.

Der Vorgang wird pro Kammer bzw. je auf dem Tanklastzug 1 angeordneten Domen 8 wiederholt, so daß der Tanklastzug 1 vollständig entladen werden kann.

Der von der Saugdüse 3 angesaugte Zucker wird in den Abscheidebehälter 7 gefördert. Dort wird der Zucker bzw. das zu entladende feinkörnige rieselfähige Medium von der Saugluft getrennt und zwischengelagert. Der untere Bereich des Abscheidebehälters 7 ist trichterförmig ausgebildet und mit einer Transportleitung verbunden.

Mittels Druckluft wird dann der aus dem Trichter unten austretende Zucker über die Transportleitung in den eigentlichen Lagerbehälter transportiert.

Die Entladestation 2 besteht im wesentlichen aus einer Saugförderanlage mit nachgeschalteter Druckförderanlage und einem Abscheidebehälter als Zwischenspeicher.

Die Saugförderanlage besteht aus dem Sauggebläse 10, der Saugleitung 5 mit der Saugdüse 3, die mit einer Kamera 9 ausgerüstet ist. Die Saugdüse 3 und die Saugleitung 5 sind an einem Ausleger 12 befestigt, der höhenverstellbar ausgeführt ist und an seinen Enden einen Hubantrieb 4 für das Anheben und Absenken der Saugdüse 3 aufweist.

Die Druckförderanlage besteht aus einem Druckgebläse 11 und einem dazugehörigem Förderleitungssystem, welches mit dem trichterförmigen Auslaß des als Zwischenspeicher ausgebildeten Abscheidebehälters 7 besteht.

Die Steuerung des Entladevorganges mittels der Komponenten der Entladestation 2 erfolgt über eine elektronische Schalt- und Steuereinheit.

Die Entladestation kann als Stationäranlage oder als fahrbare mobile Anlage ausgebildet sein. Somit ist es möglich, Tanklastzüge sowohl zum Transport von Flüssigkeiten als auch zum Transport von riesel- bzw. schüttfähigen Substanzen zu verwenden.

### Bezugszeichenaufstellung

- 1 -: Tanklastzug / Tank
- 2 -: Entladestation
- 3 -: Saugdüse
- 4 -: Hubantrieb
- 5 -: Saugleitung
- 6 -: Höhenverstellung
- 7 -: Abscheidebehälter
- 8 -: Dom
- 9 -: Kamera
- 10 -: Sauggebläse
- 11 -: Druckgebläse
- 12 -: Ausleger

## Patentansprüche

1. Verfahren zum Entladen von riesel- bzw. schüttfähigen Medien aus Tanklastzügen,
**gekennzeichnet durch** folgende Verfahrensschritte:
a) Positionierung des Tanklastzuges (1) bzw. des Tankdomes (8) unter der Saugdüse (3) mittels Bodenmarkierungen und an der Saugdüse (3) angebrachten Kamera (9),
b) Absenken des die Saugdüse (3) tragenden Auslegers (12) auf die Höhe des Tanklastzuges (1),
c) Absenken der Saugdüse (3) bis auf die Füllhöhe und Öffnen der Entriegelung der Saugdüse (3),
d) Starten des Saugvorganges, wobei die Lage der Saugdüse (3) ständig an die sich verändernde Füllhöhe angepaßt wird.

2. Verfahren nach Anspruch 1,
**dadurch gekennzeichnet, daß**
die Verfahrensschritte a) bis d) pro Kammer bzw. Dom (8) wiederholt werden, wobei die Kammern bzw. die Dome (8) jeweils unter der Saugdüse (3) positioniert werden.

3. Verfahren nach Anspruch 1 und 2,
**dadurch gekennzeichnet, daß**
nach dem Erreichen des Tankbodens die Saugdüse (3) aus ihrer senkrechten Lage jeweils nach links und/oder rechts bis zu einem vorbestimmten Anschlag ausgelenkt wird.

4. Verfahren nach Anspruch 1 bis 3,
**dadurch gekennzeichnet, daß**
die Steuerung des Entladevorganges mittels der Komponenten der Entladestation (2) über eine elektronische Schalt- und Steuereinheit erfolgt.

5. Entladestation zur Durchführung des Verfahrens gemäß
der Ansprüche 1 bis 4,
**dadurch gekennzeichnet, daß**
die Entladestation (2) aus einer Saugförderanlage mit nachgeschalteter Druckförderanlage und einem Abscheidebehälter (7) als Zwischenspeicher besteht und für die Positionierung des Tanklastzuges (1) bzw. des Tankdomes (8) unter der Saugdüse (3) Bodenmarkierungen vorgesehen sind und an der Saugdüse (3) mindestens eine Kamera (9) angeordnet ist.

6. Entladestation nach Anspruch 5,
**dadurch gekennzeichnet, daß**
die Saugförderanlage aus dem Sauggebläse (10), der Saugleitung (5) und einer am Ausleger (12) über einen Hubantrieb (4) höhenverfahrbar angeordneten Saugdüse (3) besteht.

7. Entladestation nach Anspruch 5 und 6,
**dadurch gekennzeichnet, daß**
an der Saugdüse (3) eine Kamera (9) angeordnet ist, mit deren Hilfe der Tanklastzug (1), dessen Kammern bzw. Dome (8) in Bezug zur Saugdüse positioniert werden.

8. Entladestation nach Anspruch 5 bis 7,
**dadurch gekennzeichnet, daß**
die Druckförderanlage aus dem Druckgebläse (11), einem Förderleitungssystem, welches mit dem trichterförmigen Auslaß des als Zwischenspeicher ausgebildeten Abscheidebehälters (7) verbunden ist, besteht.

9. Entladestation nach Anspruch 5 bis 8,
**dadurch gekennzeichnet, daß**
diese als Stationäranlage ausgeführt ist.

10. Entladestation nach Anspruch 5 bis 8,
**dadurch gekennzeichnet, daß**
diese als mobile Anlage ausgeführt ist.

## Claims

1. Process for unloading pourable and/or free-flowing media from tanker trucks,
**characterized by** the following process steps:
a) Positioning of the tanker truck (1) and the tank dome (8) beneath the suction nozzle (3) by means of a floor marking and a camera (9) affixed to the suction nozzle (3),
b) Lowering of the arm (12) carrying the suction nozzle (3) to the height of the tanker truck (1),
c) Lowering of the suction nozzle (3) to the filling height and opening release of the suction nozzle (3),
d) Starting of the suction process, during which the location of the suction nozzle (3) is constantly adapted to the changing filling height.

2. Process according to claim 1,
**characterized by**
process steps a) through d) being repeated per chamber and/or dome (8), during which the chambers and/or domes (8) are respectively positioned under the suction nozzle (3).

3. Process according to claims 1 and 2,
**characterized by**
the suction nozzle (3) being deflected from its perpendicular position respectively to the left and/or to the right to a predetermined limit stop after reaching the tank floor.

4. Process according to claims 1 through 3,
**characterized by**
the controlling of the unloading process occuring by means of the components of the unloading station (2) via an electronic switch and control unit.

5. Unloading station for executing the process pursuant to
claims 1 through 4,
**characterized by**
the unloading station (2) consisting of a vacuum conveyor system with downstream pressure conveyor system and a separator container (7) as interim storage, and by the provision of floor markings for the positioning of the tanker truck (1) and/or the tank dome (8) under the suction nozzle (3), and by the arrangement of at least one camera (9) on the suction nozzle (3).

6. Unloading station according to claim 5,
**characterized by**
the vacuum conveyor system consisting of the aspirator (10), the suction line (5), and a suction nozzle (3) on the arm (12) height-adjustably arranged via a lift drive (4).

7. Unloading station according to claims 5 and 6,
**characterized by**
a camera (9), with the help of which the chambers and/or domes (8) of the tanker truck (1) are positioned in relation to the suction nozzle, being arranged on the suction nozzle (3).

8. Unloading station according to claims 5 through 7,
**characterized by**
the pressure conveyor system consisting of the pressure blower (11), a feed pipe system, which is connected to the funnel-shaped outlet of the separator container (7) constructed as interim storage.

9. Unloading station according to claims 5 through 8,
**characterized by**
this being designed as a stationary system.

10. Unloading station according to claims 5 through 8,
**characterized by**
this being designed as a mobile system.

## Revendications

1. Procédé pour le déchargement de fluides coulant ou étant en vrac des camions-citernes
défini par les étapes suivantes du procédé:
a) Mise en position du camion-citerne (1) ou du dôme-citerne (8) sous la tuyère d'aspiration (3) à l'aide d'un marquage au sol et d'une caméra (9) fixée à la tuyère d'aspiration (3),
b) Baisse du bras (12) portant la tuyère d'aspiration (3) jusqu'au niveau du camion-citerne (1),
c) Baisse de la tuyère d'aspiration (3) jusqu'au niveau de remplissage et ouverture du verrouillage de la tuyère d'aspiration (3),
d) Démarrage de l'aspiration, adaptation permanente de la situation de la tuyère d'aspiration (3) au niveau changeant du bien à décharger.

2. Procédé selon spécification 1,
défini par le fait **que**
les étapes du procédé a) à d) sont répétées par chambre ou dôme (8), les chambres ou dômes (8) sont à repositionner sous la tuyère d'aspiration (3).

3. Procédé selon spécification 1 et 2,
défini par le fait **que**
après avoir atteint le fonds de la citerne, la tuyère d'aspiration (3) quitte sa position verticale et est dirigée à gauche et/ou à droite jusqu'à une butée prédéfinie.

4. Procédé selon spécification 1 à 3,
défini par le fait **que**
la commande est réalisée au moyen d'une unité électronique de manoeuvre et de commande en tenant compte des composantes de la station de déchargement (2).

5. Station de déchargement pour exécuter le procédé selon les spécifications 1 à 4,
défini par le fait **que**
la station de déchargement (2) comporte une installation de convoyage à aspiration avec en aval une installation de convoyage à pression et un réservoir de séparation (7) qui a la fonction d'un entrepôt intermédiaire et que des marquages sont prévus au sol et qu'au moins une caméra (9) est fixée à la tuyère (3) pour bien positionner le camion-citerne (1) ou le dôme citerne (8) sous la tuyère d'aspiration.

6. Station de déchargement selon spécification 5,
défini par le fait **que**
l'installation de convoyage à aspiration comporte un ventilateur aspirant (10), une conduite d'aspiration (5) et une tuyère d'aspiration (3) fixée sur un bras porteur (12) et réglable en hauteur au moyen d'un entraînement élévateur (4).

7. Station de déchargement selon spécification 5 et 6,
défini par le fait **que**
il y a une caméra (9) montée à la tuyère d'aspiration (3) qui permet de positionner le camion-citerne (1), ses chambres ou dômes (8) exactement par rapport à la tuyère d'aspiration (3).

8. Station de déchargement 5 à 7,
défini par le fait **que**
l'installation de convoyage à pression consiste en un ventilateur soufflant (11), un système de conduites de convoyage qui est raccordé à la sortie en forme d'entonnoir du réservoir de séparation (7) qui sert d'entrepôt intermédiaire.

9. Station de déchargement selon spécification 5 à 8,
défini par le fait **que**
celle-ci est conçue comme installation stationnaire.

10. Station de déchargement selon spécification 5 à 8,
défini par le fait **que**
celle-ci est conçue comme installation mobile.
